# EUROPEAN PATENT APPLICATION

(11) **EP 2 704 421 A1**
(43) Date of publication of application: **05.03.2014**
(21) Application number: 13181749.6
(22) Date of filing: 27.08.2013
(51) Int. Cl.: H04N 5/232

(54) **System for guiding users in crowdsourced video services**

(30) Priority: 31.08.2012 US 201213600297
(71) Applicant: Nokia Corporation, 02150 Espoo (FI)
(72) Inventor: Eronen, Antti, 33820 Tampere (FI); Leppänen, Jussi, 33580 Tampere (FI); Mate, Sujeet Shyamsundar, 33720 Tampere (FI); Curicio, Igor, 33100 Tampere (FI)
(74) Representative: Nokia Corporation

(57) **Abstract**

An apparatus (35) comprising at least one processor and at least one memory including computer program code may be configured to receive data corresponding to a first media content from a user captured by a first media capturing device (10). The apparatus may be configured to determine at least one media capturing parameter of the first media content to be changed. The apparatus may be configured to cause information regarding the media capturing parameter of the first media content to be changed to be transmitted to at least the first media capturing device. The apparatus may be configured to receive a second media content from a user captured by the first media capturing device, wherein the second media content differs from the first media content by at least the media capturing parameter to be changed. Corresponding methods and computer program products are also provided.

## Description

### TECHNOLOGICAL FIELD

An example embodiment of the present invention relates generally to media recording and more particularly, to a guidance system configured to direct users capturing media with a media capturing device.

### BACKGROUND

In order to provide easier or faster information transfer and convenience, telecommunication industry service providers are continually developing improvements to existing communication networks. As a result, wireless communication has become increasingly more reliable in recent years. Along with the expansion and improvement of wireless communication networks, mobile terminals used for wireless communication have also been continually improving. In this regard, due at least in part to reductions in size and cost, along with improvements in battery life and computing capacity, mobile terminals have become more capable, easier to use, and cheaper to obtain. Due to the now ubiquitous nature of mobile terminals, people of all ages and education levels are utilizing mobile terminals to communicate with other individuals or contacts, receive services and/or share information, media and other content.

Further, mobile terminals now include capabilities to capture media content, such as photographs, video recordings and/or audio recordings. As such, users may now have the ability to record media whenever users have access to an appropriately configured mobile terminal. Accordingly, multiple users may attend an event with each user using a different mobile terminal to capture various media content of the event activities. The captured media content may include redundant content and/or content having undesirable qualities. In addition, some users may capture media content of particular unique portions of the event activity such that each user has a unique perspective and/or view of the event activity. Thereby, the entire library of captured content by multiple users may be compiled to provide a composite media content comprising multiple content media captured by different users of the particular event activity to provide a more fulsome media content of an event. However, efforts to mix media content, such as video recordings, captured by a number of different users of the same event have proven to be challenging, particularly in instances in which the users who are capturing the video recordings are unconstrained in regards to their relative position to the performers and in regards to the performers who are in the field of view of the video recordings.

### BRIEF SUMMARY

A method, apparatus and computer program product therefore provide for a guidance system for providing instructions for capturing high quality media content portions.

In an example embodiment, an apparatus comprises at least one processor and at least one memory including computer program code, the at least one memory and the computer program code configured to, with the processor, cause the apparatus to receive data corresponding to a first media content captured by a first media capturing device, wherein the first media content is associated with at least one media capturing parameter. The apparatus may be further configured to determine at least a first media capturing parameter associated with the first media content to be changed. Additionally and/or alternatively, the apparatus may be configured to cause information regarding the first media capturing parameter of the first media content to be changed to be transmitted to at least the first media capturing device. In some embodiments, the apparatus may be configured to receive a second media content captured by the first media capturing device, wherein the second media content differs from the first media content by at least the first media capturing parameter.

In another example embodiment, a method is provided, which comprises receiving data corresponding to a first media content captured by a first media capturing device, wherein the first media content is associated with at least one media capturing parameter. The method may further include determining, by at least a processor, at least one media capturing parameter associated with the first media content to be changed. In some embodiments, the method may comprise causing information regarding the first media capturing parameter of the first media content to be changed to be transmitted to at least the first media capturing device. According to some embodiments, the method may include receiving a second media content captured by the first media capturing device, wherein the second media content differs from the first media content by at least the media capturing parameter.

In another example embodiment, a computer program product is provided. The computer program product of this example embodiment includes at least one non-transitory computer readable storage medium having computer-readable program instructions stored therein, the computer-readable program instructions comprising program instructions configured to cause an apparatus to perform a method comprising receiving data corresponding to a first media content captured by a first media capturing device, wherein the first media content is associated with at least one media capturing parameter. The computer program product may be further configured to cause an apparatus to perform a method including determining, by at least a processor, at least one media capturing parameter associated with the first media content to be changed. In some embodiments, the computer program product may be configured to cause an apparatus to perform a method comprising causing information regarding the first media capturing parameter of the first media content to be changed to be transmitted to at least the first media capturing device. According to some embodiments, the computer program product may be configured to cause an apparatus to perform a method comprising receiving a second media content captured by the first media capturing device, wherein the second media content differs from the first media content by at least the media capturing parameter.

In another example embodiment, a method is provided comprising causing data corresponding to a first media content captured by a first media capturing device to be transmitted to a media content analysis device, wherein the first media content is associated with at least one media capturing parameter. The method may include receiving instructions regarding the first media capturing parameter of the first media content to be changed. In some embodiments, the method may further comprise causing data corresponding to a second media content captured by the first media capturing device to be transmitted to a media content analysis device, wherein the second media content differs from the first media content by at least the first media capturing parameter.

In some example embodiments, an apparatus is provided comprising at least one processor and at least one memory including computer program code, the at least one memory and the computer program code configured to, with the processor, cause the apparatus to cause data corresponding to a first media content captured by the apparatus to be transmitted to a media content analysis device, wherein the first media content is associated with at least one media capturing parameter. The apparatus may further comprise at least one processor and at least one memory including computer program code, the at least one memory and the computer program code configured to, with the processor, cause the apparatus to receive instructions regarding the first media capturing parameter of the first media content to be changed. In some embodiments, the apparatus may be configured to cause data corresponding to a second media content captured by the apparatus to be transmitted to a media content analysis device, wherein the second media content differs from the first media content by at least the first media capturing parameter.

In a further example embodiment, an apparatus is provided which comprises means for receiving data corresponding to a first media content captured by a first media capturing device, wherein the first media content is associated with at least one media capturing parameter. The apparatus may further include means for determining at least one media capturing parameter associated with the first media content to be changed. In some embodiments, the apparatus may include means for causing information regarding the first media capturing parameter of the first media content to be changed to be transmitted to at least the first media capturing device. According to some embodiments, the apparatus may include means for receiving a second media content captured by the first media capturing device, wherein the second media content differs from the first media content by at least the media capturing parameter.

In another example embodiment, an apparatus is provided which comprises means for causing data corresponding to a first media content captured by a first media capturing device to be transmitted to a media content analysis device, wherein the first media content is associated with at least one media capturing parameter. The apparatus may include means for receiving instructions regarding the first media capturing parameter of the first media content to be changed. According to some embodiments, the apparatus may include means for causing data corresponding to a second media content captured by the first media capturing device to be transmitted to a media content analysis device, wherein the second media content differs from the first media content by at least the first media capturing parameter.

The above summary is provided merely for purposes of summarizing some example embodiments of the invention so as to provide a basic understanding of some aspects of the invention. Accordingly, it will be appreciated that the above described example embodiments are merely examples and should not be construed to narrow the scope or spirit of the invention in any way. It will be appreciated that the scope of the invention encompasses many potential embodiments, some of which will be further described below, in addition to those here summarized.

### BRIEF DESCRIPTION OF THE SEVERAL VIEWS OF THE DRAWINGS

Having thus described example embodiments of the present disclosure in general terms, reference will now be made to the accompanying drawings, which are not necessarily drawn to scale, and wherein:
FIG. 1 illustrates a schematic representation of a plurality of mobile terminals capturing media content at an event activity according to an example embodiment of the present invention;
FIG. 2 illustrates a schematic block diagram of an apparatus that may be configured to capture user generated media content and to receive instructions for capturing requested media content according to an example embodiment of the present invention;
FIG. 3a illustrates a schematic representation of an event attended by a plurality of users having media capturing devices that illustrates the initial field of view of the media capturing devices according to an example embodiment of the present invention;
FIG. 3b illustrates a schematic representation of an event attended by a plurality of users that illustrates the field of view of the media capturing devices after having received a request to change the focal length and correspondingly, the field of view of the media capturing devices according to an example embodiment of the present invention;
FIG. 3c illustrates a schematic representation of an event attended by a plurality of users having media capturing devices that illustrates the initial position and the initial field of view of the media capturing devices according to an example embodiment of the present invention;
FIG. 3d illustrates a schematic representation of an event attended by a plurality of users that illustrates the field of view of the media capturing devices after having received a request to change the focal length and correspondingly, the field of view of the media capturing devices according to an example embodiment of the present invention;
FIG. 4a illustrates a field of view from a media capturing device according to an example embodiment of the present invention;
FIG. 4b illustrates a field of view from a media capturing device according to an example embodiment of the present invention;
FIG. 4c illustrates a field of view from a media capturing device according to an example embodiment of the present invention;
FIG. 4d illustrates a field of view from a media capturing device according to an example embodiment of the present invention;
FIG. 5 illustrates an apparatus configured to display instructions to a user attending an event according to one embodiment of the present invention; and
FIG. 6 is a flow chart illustrating operations performed by an apparatus that may include or otherwise be associated with a mobile terminal in accordance with an example embodiment of the present invention.

### DETAILED DESCRIPTION

Some embodiments of the present invention will now be described more fully hereinafter with reference to the accompanying drawings, in which some, but not all embodiments of the invention are shown. Indeed, various embodiments of the invention may be embodied in many different forms and should not be construed as limited to the embodiments set forth herein. Like reference numerals refer to like elements throughout.

As used herein, the terms "data," "content," "information" and similar terms may be used interchangeably to refer to data capable of being transmitted, received and/or stored in accordance with embodiments of the present invention. Moreover, the term "exemplary", as may be used herein, is not provided to convey any qualitative assessment, but instead merely to convey an illustration of an example. Thus, use of any such terms should not be taken to limit the spirit and scope of embodiments of the present invention.

The term "computer-readable medium" as used herein refers to any medium configured to participate in providing information to a processor, including instructions for execution. Such a medium may take many forms, including, but not limited to a non-transitory computer-readable storage medium (e.g., non-volatile media, volatile media), and transmission media. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization or other physical properties transmitted through the transmission media. Examples of non-transitory computer-readable media include a magnetic computer readable medium (e.g., a floppy disk, hard disk, magnetic tape, any other magnetic medium), an optical computer readable medium (e.g., a compact disc read only memory (CD-ROM), a digital versatile disc (DVD), a Blu-Ray disc, or the like), a random access memory (RAM), a programmable read only memory (PROM), an erasable programmable read only memory (EPROM), a FLASH-EPROM, or any other non-transitory medium from which a computer can read. The term computer-readable storage medium is used herein to refer to any computer-readable medium except transmission media. However, it will be appreciated that where embodiments are described to use a computer-readable storage medium, other types of computer-readable mediums may be substituted for or used in addition to the computer-readable storage medium in alternative embodiments.

Additionally, as used herein, the term 'circuitry' refers to (a) hardware-only circuit implementations (for example, implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device, and/or other computing device.

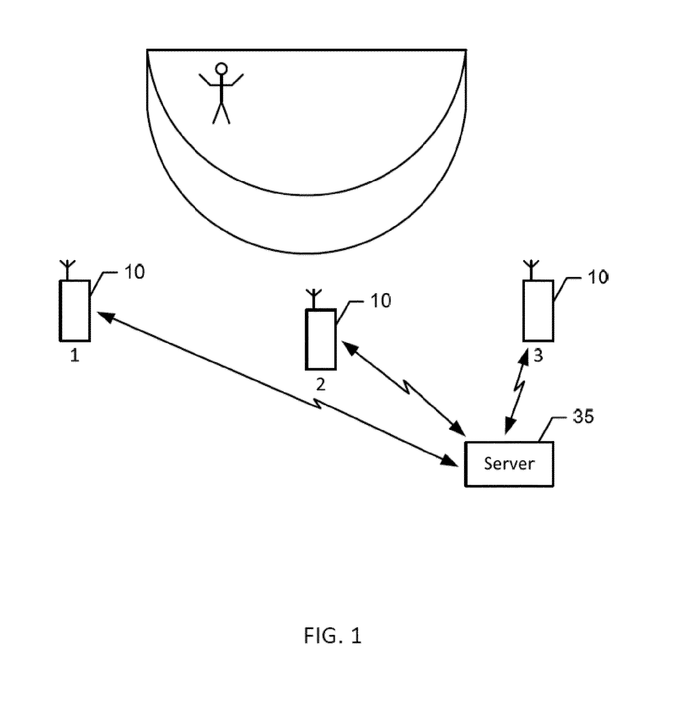

As indicated above, some embodiments of the present invention may be employed in methods, apparatuses and computer program products configured to provide instructions and/or guidance for capturing media content. In this regard, FIG. 1 illustrates a concert where a performer is on stage. The concert of FIG. 1 is only for purposes of example and the method, apparatus and computer program product may also be utilized in conjunction with a number of different types of events including sporting events, plays, musicals, weddings, meetings, political events, other types of performance, and/or any ad hoc gatherings of people. Regardless of the type of event, a plurality of people may attend the event. As shown in FIG. 1, a number of people who attend the event may each have user equipment, such as the mobile terminal 10, which may include a media capturing module, such as a video camera, for capturing media content, such as video recordings, image recordings, audio recordings and/or the like. With respect to the example depicted in FIG. 1, three mobile terminals designated as 1, 2 and 3 may be carried by three different attendees with each mobile terminal configured to capture media content, such as a video recording of at least a portion of the event. While the user equipment of the illustrated embodiment may be mobile terminals, the user equipment need not be mobile and, indeed, other types of user equipment may be used.

Based upon the relative location and orientation of each mobile terminal 10, the field of view of the media capturing module of each mobile terminal may include aspects of the same event. Alternatively, the field of view of the media capturing module of each mobile terminal may include no similar aspects of the same event. As shown in FIG. 1, the mobile terminals 10 or other types of user equipment may provide the captured media content to a server 35 or other media content processing device that is configured to analyze the user-generated media content, such as analyzing a subjective and/or objective quality of the user-generated media content. As shown in FIG. 1, the server 35 or other media content processing device that receives the recorded media content captured by the media capturing modules may be a separate element, distinct from the user equipment. Alternatively, one or more of the user equipment may perform the functionality associated with the analysis of the captured user-generated media content. However, for the purposes of example, but not of limitation, a server or other media content processing device that is distinct from the user equipment including the media capturing modules will be described below.

As shown in FIG. 1, the plurality of mobile terminals 10 or other user equipment may communicate with the server 35 or other media content processing device so as to provide information regarding the recorded videos and/or related information, e.g., context information, in a variety of different manners including via wired or wireless communication links. Indeed, while the example of embodiment illustrates direct communications links between user equipment and the server or other media content processing device, the system of another embodiment may include a network for supporting wired and/or wireless communications therebetween.

In some embodiments the mobile terminals 10 may be capable of communicating with other devices, such as other user terminals, either directly, or via a network. The network may include a collection of various different nodes, devices or functions that may be in communication with each other via corresponding wired and/or wireless interfaces. As such, the illustration of FIG. 1 should be understood to be an example of a broad view of certain elements of the system and not an all inclusive or detailed view of the system or the network. Although not necessary, in some embodiments, the network may be capable of supporting communication in accordance with any one or more of a number of first-generation (1G), second-generation (2G), 2.5G, third-generation (3G), 3.5G, 3.9G, fourth-generation (4G) mobile communication protocols, Long Term Evolution (LTE), and/or the like. Thus, the network may be a cellular network, a mobile network and/or a data network, such as a local area network (LAN), a metropolitan area network (MAN), and/or a wide area network (WAN), for example, the Internet. In turn, other devices such as processing elements (for example, personal computers, server computers or the like) may be included in or coupled to the network. By directly or indirectly connecting the mobile terminals 10 and the other devices to the network, the mobile terminals and/or the other devices may be enabled to communicate with each other, for example, according to numerous communication protocols including Hypertext Transfer Protocol (HTTP) and/or the like, to thereby carry out various communication or other functions of the user terminal and the other devices, respectively. As such, the mobile terminals 10 and the other devices may be enabled to communicate with the network and/or each other by any of numerous different access mechanisms. For example, mobile access mechanisms such as universal mobile telecommunications system (UMTS), wideband code division multiple access (W-CDMA), CDMA2000, time division-synchronous CDMA (TD-CDMA), global system for mobile communications (GSM), general packet radio service (GPRS) and/or the like may be supported as well as wireless access mechanisms such as wireless LAN (WLAN), Worldwide Interoperability for Microwave Access (WiMAX), WiFi, ultra-wide band (UWB), Wibree techniques and/or the like and fixed access mechanisms such as digital subscriber line (DSL), cable modems, Ethernet and/or the like. Thus, for example, the network may be a home network or other network providing local connectivity.

The mobile terminals 10 may be configured to capture media content, such as pictures, video and/or audio recordings. As such, the system may additionally comprise at least one media content analysis server 35 which may be configured to receive any number of user-generated media content from the mobile terminals 10, either directly or via the network. In some embodiments, the media content analysis server 35 may be embodied as a single server, server bank, or other computer or other computing devices or node configured to transmit and/or receive composite media content and/or user-generated media content by any number of mobile terminals. As such, for example, the media content analysis server may include other functions or associations with other services such that the composite media content and/or user-generated media content stored on the media content analysis server may be provided to other devices, other than the mobile terminal which originally captured the media content. Thus, the media content analysis server may provide public access to composite media content received from any number of mobile terminals. Although illustrated in FIG. 1 as a single server, in some embodiments the media content analysis server 35 comprises a plurality of servers.

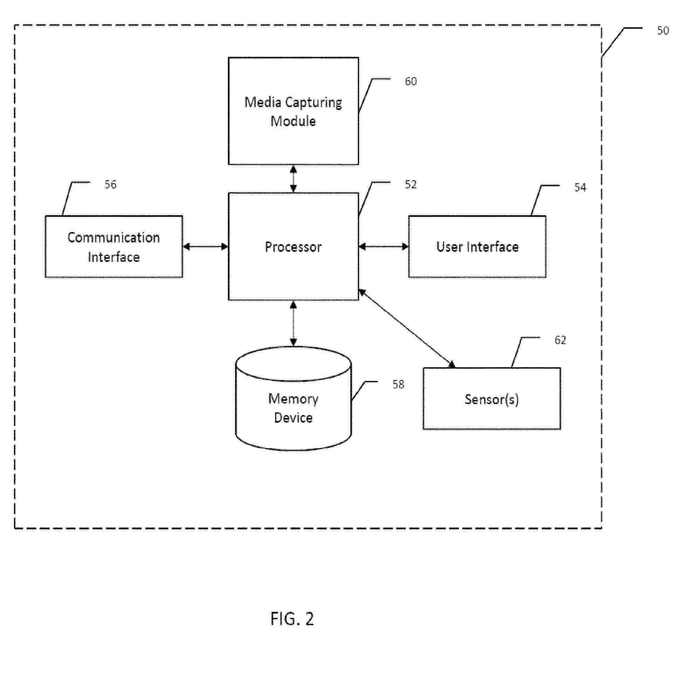

In an example embodiment, an apparatus 50 is provided that may be employed by devices performing example embodiments of the present invention. The apparatus 50 may be embodied, for example, as any device hosting, including, controlling, comprising, or otherwise forming a portion of the mobile terminal 10 and/or the media content analysis server 35. However, embodiments may also be embodied on a plurality of other devices such as for example where instances of the apparatus 50 may be embodied by a network entity. As such, the apparatus 50 of FIG. 2 is merely an example and may include more, or in some cases less, than the components shown in FIG. 2.

With further regard to FIG. 2, the apparatus 50 may include or otherwise be in communication with a processor 52, an optional user interface 54, a communication interface 56 and a non-transitory memory device 58. The memory device 58 may be configured to store information, data, files, applications, instructions and/or the like. For example, the memory device 58 could be configured to buffer input data for processing by the processor 52. Alternatively or additionally, the memory device 58 could be configured to store instructions for execution by the processor 52. In an instance in which the apparatus 50 is embodied by a mobile terminal 10, the apparatus 50 may also be configured to capture media content and, as such, may include a media capturing module 60, such as a camera, a video camera, a microphone, and/or any other device configured to capture media content, such as pictures, audio recordings, video recordings and/or the like.

As mentioned above, in some embodiments, the apparatus 50 may be embodied by a mobile terminal 10, the media content analysis server 35, or a fixed communication device or computing device configured to employ an example embodiment of the present invention. However, in some embodiments, the apparatus 50 may be embodied as a chip or chip set. In other words, the apparatus 50 may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus 50 may therefore, in some cases, be configured to implement embodiments of the present invention on a single chip or as a single "system on a chip." As such, in some cases, a chip or chipset may constitute means for performing one or more operations for providing the functionalities described herein and/or for enabling user interface navigation with respect to the functionalities and/or services described herein.

The processor 52 may be embodied in a number of different ways. For example, the processor 52 may be embodied as one or more of various hardware processing means such as a coprocessor, a microprocessor, a controller, a digital signal processor (DSP), a processing element with or without an accompanying DSP, or various other processing devices including integrated circuits such as, for example, an application specific integrated circuit (ASIC), an field programmable gate array (FPGA), a hardware accelerator, a special-purpose computer chip, or other hardware processor. As such, in some embodiments, the processor 52 may include one or more processing cores configured to perform independently. A multi-core processor may enable multiprocessing within a single physical package. Additionally or alternatively, the processor 52 may include one or more processors configured in tandem via the bus to enable independent execution of instructions, pipelining and/or multithreading.

In an example embodiment, the processor 52 may be configured to execute instructions stored in the memory device 58 or otherwise accessible to the processor. The processor 52 may also be further configured to execute hard coded functionality. As such, whether configured by hardware or software methods, or by a combination thereof, the processor 52 may represent an entity (for example, physically embodied in circuitry) capable of performing operations according to embodiments of the present invention while configured accordingly. Thus, for example, when the processor 52 is embodied as an ASIC, FPGA or the like, the processor 52 may be specifically configured hardware for conducting the operations described herein. Alternatively, as another example, when the processor 52 is embodied as an executor of software instructions, the instructions may specifically configure the processor to perform the algorithms and/or operations described herein when the instructions are executed. However, in some cases, the processor 52 may be a processor of a specific device (for example, a user terminal, a network device such as a server, a mobile terminal, or other computing device) adapted for employing embodiments of the present invention by further configuration of the processor by instructions for performing the algorithms and/or operations described herein. The processor 52 may include, among other things, a clock, an arithmetic logic unit (ALU) and logic gates configured to support operation of the processor.

Meanwhile, the communication interface 54 may be any means such as a device or circuitry embodied in either hardware, software, or a combination of hardware and software that is configured to receive and/or transmit data from/to a network and/or any other device or module in communication with the apparatus 50. In this regard, the communication interface 54 may include, for example, an antenna (or multiple antennas) and supporting hardware and/or software for enabling communications with a wireless communication network. In fixed environments, the communication interface 54 may alternatively or also support wired communication. As such, the communication interface 54 may include a communication modem and/or other hardware/software for supporting communication via cable, digital subscriber line (DSL), universal serial bus (USB), Ethernet, High-Definition Multimedia Interface (HDMI) or other mechanisms. Furthermore, the communication interface 54 may include hardware and/or software for supporting communication mechanisms such as BLUETOOTH®, Infrared, UWB, WiFi, and/or the like, which are being increasingly employed in connection with providing home connectivity solutions.

In some embodiments the apparatus 50 may further be configured to transmit and/or receive media content, such as a picture, video and/or audio recording. In one embodiment, the communication interface 56 may be configured to transmit and/or receive a media content package comprising a plurality of data, such as a plurality of pictures, videos, audio recordings and/or any combination thereof. In this regard, the processor 52, in conjunction with the communication interface 56, may be configured to transmit and/or receive data corresponding to a composite media content package relating to media content captured at a particular event, location, and/or time. According to some embodiments, the processor 52, in conjunction with the communication interface 56 and/or the media capturing module 60, may be configured to transmit data corresponding to a user-captured media content in real time to a media content analysis server and/or the like. For example, the processor 52, in conjunction with the communication interface 56 and/or the media capturing module 60, may be configured to transmit data, such as information related to a user-captured media content. In another embodiment, the data may include the user-captured media content itself. Additionally and/or alternatively, the data may include parameters, such as a focal length, field of view, orientation with respect to magnetic north, position, tilt angle, and/or the like, associated with a media capturing module 60 that captured the user-captured media content. In some embodiments, the media capturing module 60 may include a camera, a video recorder, an audio recorder and/or the like. Accordingly, the processor 52 may cause the composite media content to be displayed upon a user interface 54, such as a display and/or a touchscreen display. Further still, the apparatus 50 may be configured to transmit and/or receive instructions regarding a request to capture media content from a particular location and/or to capture media content according to specified parameters. As such, the apparatus 50 may be configured to display a map or other directional indicia on a user interface 54, such as a touchscreen display and/or the like.

Although the apparatus 50 need not include a user interface 54, such as in instances in which the apparatus is embodied by a media content analysis server 35, the apparatus of other embodiments, such as those in which the apparatus is embodied by a mobile terminal 10, may include a user interface. In those embodiments, the user interface 54 may be in communication with the processor 52 to display media content being captured by the media capturing module 60. Further, the user interface 54 may be in communication with the processor 52 to display navigational indicia and/or instructions for capturing media content at a desired location and/or capturing media content according to specified parameters. For example, the user interface 54 may include a display and/or the like configured to display a map with navigational indicia, such as a highlighted target position, configured to provide a user with instructions for traveling to a desired location to capture media content. In some embodiments, the user interface 54 may include a display and/or the like configured to display an indicia, such as a highlighted object of interest, configured to provide a user with instructions for focusing on the highlighted object of interest so as to capture a sharper image, video, and/or audio recording of the object of interest. The user interface 54 may also include, for example, a keyboard, a mouse, a joystick, a display, a touch screen, a microphone, a speaker, or other input/output mechanisms. Alternatively or additionally, the processor 52 may comprise user interface circuitry configured to control at least some functions of one or more elements of the user interface 54, such as, for example, the speaker, the ringer, the microphone, the display, and/or the like. The processor 52 and/or user interface circuitry comprising the processor 52 may be configured to control one or more functions of one or more elements of the user interface 54 through computer program instructions (e.g., software and/or firmware) stored on a memory accessible to the processor 52 (e.g., memory device 58, and/or the like). In another embodiment, the user interface 54 may be configured to record and/or capture media content as directed by a user. Accordingly, the apparatus 50, such as the processor 52 and/or the user interface 54, may be configured to capture media content with a camera, a video camera, and/or any other image data capturing device and/or the like.

In one embodiment, the media content that is captured may include a device-specific user identifier that provides a unique identifier as to when the media content was captured and by whom or what device captured the media content. In this regard, the apparatus 50 may include a processor 52, user interface 54, and/or media capturing module 60 configured to provide a user identifier associated with media content captured by the apparatus 50.

The apparatus 50 may also optionally include or otherwise be associated or in communication with one or more sensors 62 configured to capture context information. The sensors may include a global positioning system (GPS) sensor or another type of sensor for determining a position of the apparatus. The sensors may additionally or alternatively include an accelerometer, a gyroscope, a compass or other types of sensors configured to capture context information concurrent with the capture of the media content by the media capturing module 60. In some embodiments, the sensors 62 may, in conjunction with the processor 52 and/or the media capturing module 60, be configured to capture context information, such as the focal length, zoom level, aperture settings, and/or the like of the apparatus 50 when capturing media content. Context information may further include the position of the apparatus, the altitude of the apparatus, the tilt of the apparatus with respect to the horizon, the orientation of the apparatus with respect to a known direction, the zoom level of the apparatus, the focal length of the apparatus, the field of view of the apparatus, acceleration data of the apparatus, gyroscopic data of the apparatus, and/or the like. The sensor(s) may provide information regarding the context of the apparatus to the processor 52, as shown in FIG. 2.

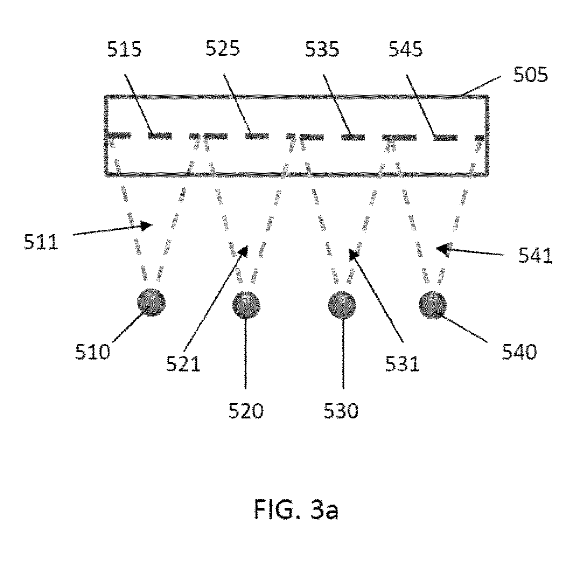

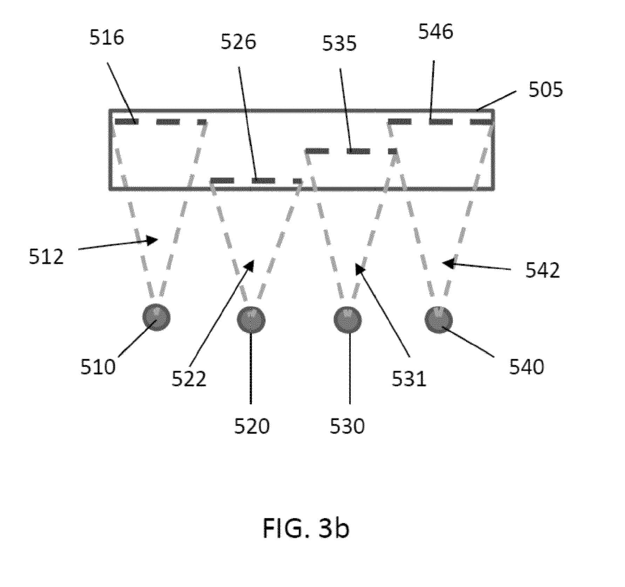

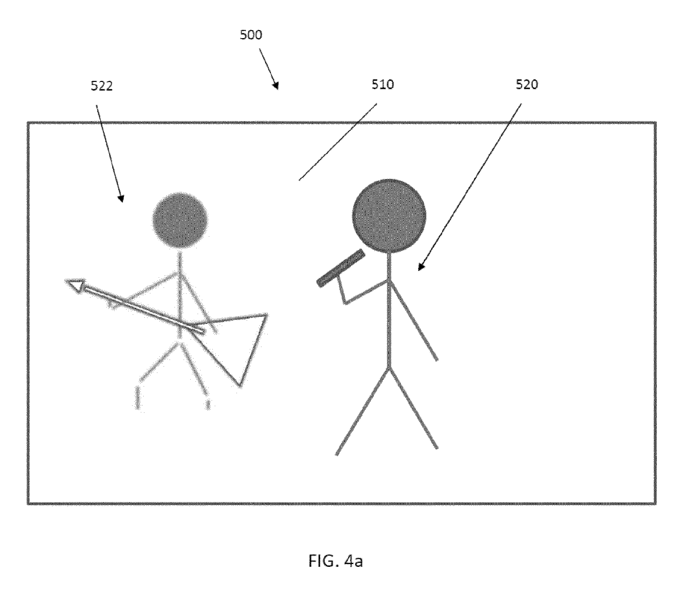

FIGs. 3a and 3b illustrate a schematic representation of an event attended by a first user 510, a second user 520, a third user 530, and a fourth user 540. According to one embodiment of the present invention, the first user 510, second user 520, third user 530 and fourth user 540 may be focusing on and/or capturing media content of an area of interest on a stage 505. The captured media content of an area of interest may be captured in accordance with one or more parameters of the media capturing device, such as a focal length, field of view, orientation with respect to magnetic north, position, tilt angle, and/or the like. Accordingly, the mobile terminal of the first user 510 may have an initial field of view 511 with a depth of field 515, the mobile terminal of the second user 520 may have an initial field of view 521 with a depth of field 525, the mobile terminal of the third user 530 may have an initial field of view 531 with a depth of field 535, and the fourth user 540 may have an initial field of view 541 with a depth of field 545. As shown in FIG. 3a, the initial field of views 511, 521, 531, 541 of the users 510, 520, 530, 540 have substantially equivalent focal lengths. In one embodiment of the present invention, a media content analysis server may determine a need for the users 510, 520, 530, 540 to capture a second media content having a different parameter, such as a different focal length, than the first media content captured by the respective users. For example, in some embodiments, the first user mobile terminal 510, the second user mobile terminal 520, the third user mobile terminal 530, and the fourth user mobile terminal 540 may be configured to provide the parameter(s) according to which the first media content was captured, such as focal length data, e.g., data corresponding to the focal length of the media capturing module of the respective mobile terminals at the time that the first media content was captured. In this regard, the parameter(s) may be provided to the media content analysis server and/or the media content processing device. Additionally and/or alternatively, the mobile terminals may be configured to transmit the first captured media content in substantially real-time to a media content analysis server. For example, the mobile terminals may be configured to transmit a portion of the first media content, such as 1 second of the captured media content, at predefined intervals, such as every 30 seconds. Further, the mobile terminals may be configured to transmit in substantially real-time contextual data concurrently with the captured media content. Accordingly, a media content analysis server may be configured to receive captured media content from each of the mobile terminals along with one or more parameters according to which the media content was captured, as shown in FIG. 4a, indicating that the captured media content from each of the mobile terminals was captured at a particular focal length substantially equal to the focal lengths of the other mobile terminals.

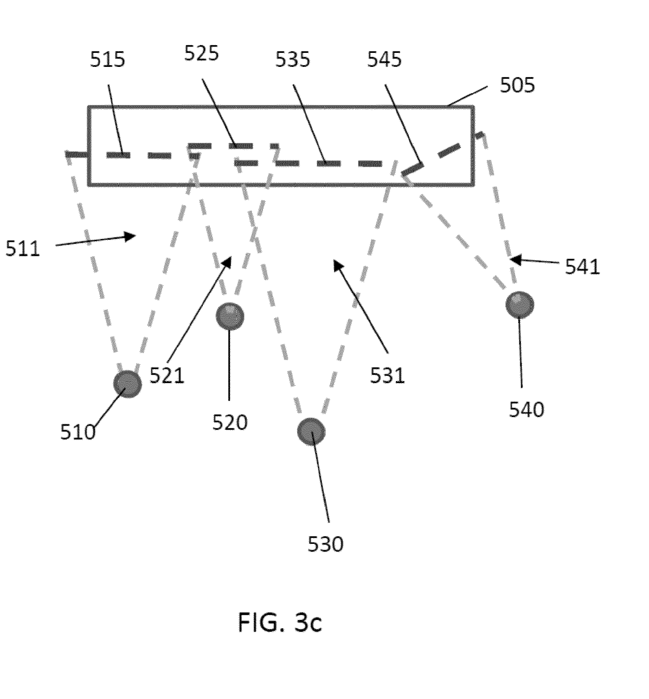

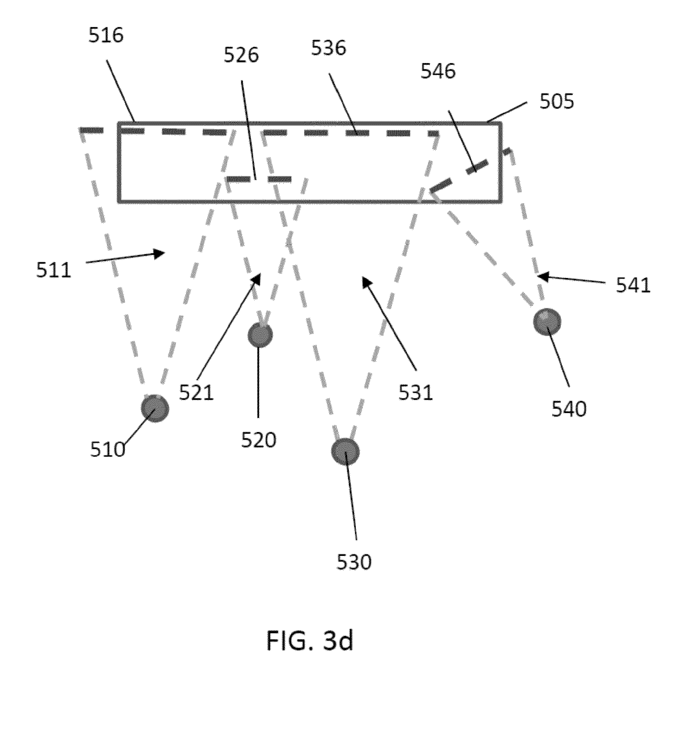

In some embodiments, the media content analysis server may be configured to instruct particular mobile terminals to capture a second media content under different parameters. For example, the media content analysis server may receive the first captured media content from the respective mobile terminals and determine that the mobile terminal should capture the media content at a different focal length. As shown in FIG. 3b, the media content analysis server may transmit instructions to the mobile terminals of the first, second, and fourth users 510, 520, 540 to modify the focal lengths of their respective devices to capture a second media content. As such, the first user 510, second user 520, and fourth user 540 may capture a second media content having or otherwise captured in accordance with a different parameter, such as the different focal length, than the first media content. Accordingly, the mobile terminal of the first user 510, the mobile terminal of the second user 520, and the mobile terminal of the fourth user 540 may capture a second media content having a different field of view 512, 522, 542 and a different depth of field 516, 526, 546 respectively. Although FIGs. 3a and 3b illustrate one embodiment of the present invention wherein the media content analysis server may instruct the user to capture a second media content having a different focal length, the media content analysis server may be configured to provide a user with instructions to capture a second media content with any number of different parameters, such as the position of the apparatus, the altitude of the apparatus, the tilt of the apparatus with respect to the horizon, the orientation of the apparatus with respect to a known direction, the zoom level of the apparatus, the field of view of the apparatus, acceleration data of the apparatus, gyroscopic data of the apparatus, and/or the like. FIGs. 3c and 3d illustrate another embodiment of the present invention wherein the users 510, 520, 530, 540 may be positioned at different distances from an area of interest of a stage 505. The depth of field for each of the mobile terminals for first, second, third, and fourth users 510, 520, 530, 540 may be substantially similar even though the positions and/or locations of the first, second, third, and fourth users are different. The detection of closely positioned depth of fields may be accomplished by analyzing the occurrence of the depth of field for different users based on the location, a directional orientation, such as the orientation with respect to magnetic north, and/or the focal length of the different capturing devices. Subsequently, the server may signal the individual capturing devices to change the respective focal lengths in a manner that ensures a desired coverage of the scene, target, and/or area of interest by changes in the occurrence of the depth of field locations.

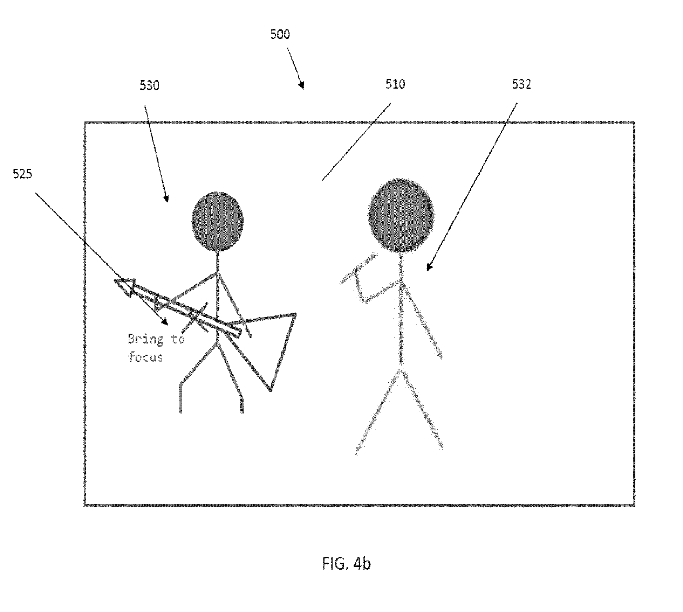

In some embodiments, a media content analysis server may be configured to determine a desired target area of interest from a first media content and/or from data corresponding to a first media content suitable for capturing a second media content having at least one different parameter. For example, a media content analysis server may be configured to receive data corresponding to a first media content with a field of view of an area of interest including a portion of the first media content that is unfocused. As shown in FIG. 4a, a mobile terminal 500 may be configured to capture a first media content and display such media content on a user interface 510. The media content may include a focused portion 520, such as of a singer, and an unfocused portion 522, such as of a guitarist. According to some embodiments of the present invention, the media content analysis server may be configured to determine that a second media content should be captured by the device which captured the first media content portion and may be further configured to determine that an unfocused portion 522 of the first media content should be brought into focus when captured in a second media content. A determination may be accomplished, for example, by utilization of face detection on one or more video frames and analyzing a parameter, such as contrast, sharpness, and/or the like of regions detected as faces. If one or more regions corresponding to the detected faces has an unacceptable contrast, sharpness, and/or other parameter, the medic content analysis server may be configured to determine that the object corresponding to the detected face is out of focus. As such, the media content analysis server may be configured to provide the mobile terminal with an indicia 525 providing instructions to focus the unfocused portion 522 of the first media content when capturing the second media content. The indicia 525 may comprise text, visual markers, highlighted portions, and/or the like so as to instruct the user to change a parameter of the mobile terminal when capturing the second media content. As shown in FIG. 4b, the second media content may now include a focused portion 530 which was previously an unfocused portion 522 in the first media content. Additionally and/or alternatively, the media content analysis server may be configured to change the parameters of the mobile terminal without interaction of the user such that the mobile terminal captures a second media content with at least one parameter that is different from the first media content. Such a change may be caused, for example, by transmitting data corresponding to instructions detailing the parameter to be changed to the mobile device using a suitable signaling mechanism. The signal may be communicated by a protocol, such as Session Initiation Protocol (SIP), Real Time Streaming Protocol (RTSP), HTTP and/or any suitable protocol. The parameter to be changed may consist of one or more parameters, and the corresponding change may be described using Session Description Protocol (SDP), Extensible Markup Language (XML), and/or any suitable format. In another embodiment, the media content analysis server may be configured to change the parameters of the mobile terminal upon confirmation of the user capturing the media content. For example, the media content analysis server may transmit data corresponding to instructions detailing a parameter of the first media content to be changed. Further, the media content analysis server may provide instructions to the mobile terminal to change a particular parameter so as to capture a second media content different from a first media content by at least the indicated parameter to be changed. The mobile terminal may subsequently provide the user, via a user interface, with the option to confirm the parameter change. In such an embodiment, the user may provide an input to the mobile terminal confirming the parameter change, and the mobile terminal may be configured to change the parameter upon receiving the user input. As such, the mobile terminal may then capture a second media content different from the first media content by at least the changed parameter.

In some embodiments, a media content analysis server may include a model of an event venue setting, such as an indoor map of the event venue. Further, the model of the event venue setting may include pre-determined locations, positions, and/or areas for capturing media content and/or pre-determined locations, positions, and/or areas of the event venue to be captured by a user with a mobile terminal. Accordingly, when a media content analysis server receives captured media content from a user in near real-time, the media content analysis server may also receive contextual data, such as data corresponding to the parameters of the mobile terminal. The media content analysis server may be configured to analyze the contextual data with respect to the event venue model. For example, the media content analysis server may be configured to compare the position of the mobile terminal providing user-captured media content with respect to a pre-determined position from an event venue model. In some embodiments, the media content analysis server may be configured to compare media content captured by a first mobile terminal with media content captured by a second mobile terminal. As such, the media content analysis server may be configured to compare a field of view from a first mobile terminal with a field of view from a second mobile terminal. The media content analysis server may be configured to determine that the fields of view of the first and second mobile terminals are substantially similar, and may send instructions to either of the mobile terminals to change at least one parameter and/or setting of the mobile terminal such that the fields of view of the first and second mobile terminals will be different.

According to some embodiments, a media content analysis server may include pre-determined parameter and/or setting thresholds for a particular mobile terminal. For example, a media content analysis server may include pre-determined thresholds for acceleration of a mobile device. As such, the media content analysis server may receive contextual data, such as accelerometer data, of a mobile terminal capturing media content. The accelerometer data may indicate that the mobile terminal is accelerating faster and/or moving more than the pre-determined threshold. For example, the media content analysis server may measure the root-mean-square value of the accelerometer data, and compare this to a predetermined threshold. Such a predetermined threshold may be determined to correspond with when the device is fully and/or almost stationary, with values about the predetermine threshold corresponding to situations where the device movement contributes to undesirable video recording quality, such as shaky video recordings and/or the like, that are uncorrectable with the use of video stabilization algorithms. Accordingly, the media content analysis server may be configured to send instructions to the user to steady the mobile terminal and limit the amount of acceleration and/or movements. In some embodiments, if at least one of the mobile terminals is not within the predetermined threshold, the media content analysis service may provide instructions to the at least one user to mount the mobile terminal to a steady position, such as a tripod, stand, and/or the like.

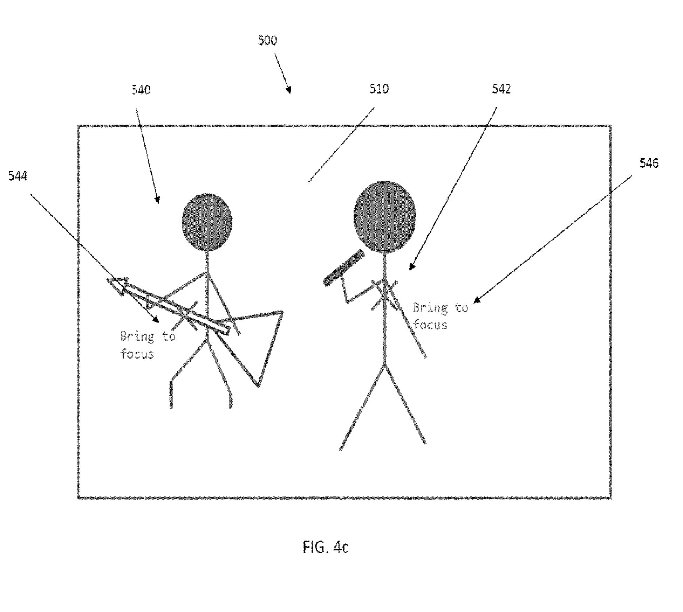

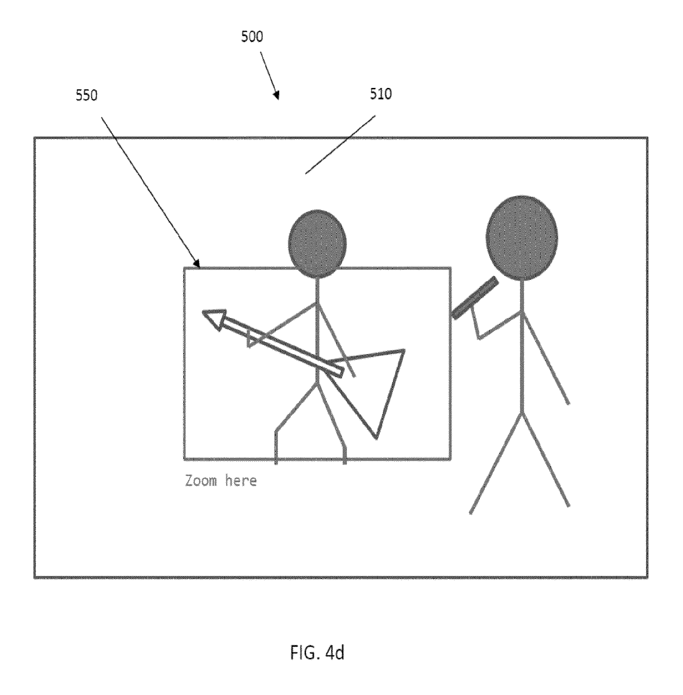

FIG. 4c illustrates another embodiment to the present invention wherein a media content analysis server has provided a mobile terminal 500 with a plurality of instructions via a plurality of indicia 544, 546 to focus on both target objects of interest 540, 542. In another embodiment, the media content analysis server may be configured to provide the user of a mobile terminal with an indicia 550 to change a parameter, such as the zoom level of the mobile terminal. As shown in FIG. 4d, the indicia 550 may provide the user of the mobile terminal to zoom in on a particular target area of interest, such as a guitarist's guitar. In some embodiments, the indicia may include augmented reality data. For example, the indicia may be a visual indicia, such as an outline of a desired field of view to be zoomed in on, overlaid on a scene displayed upon a mobile terminal user interface.

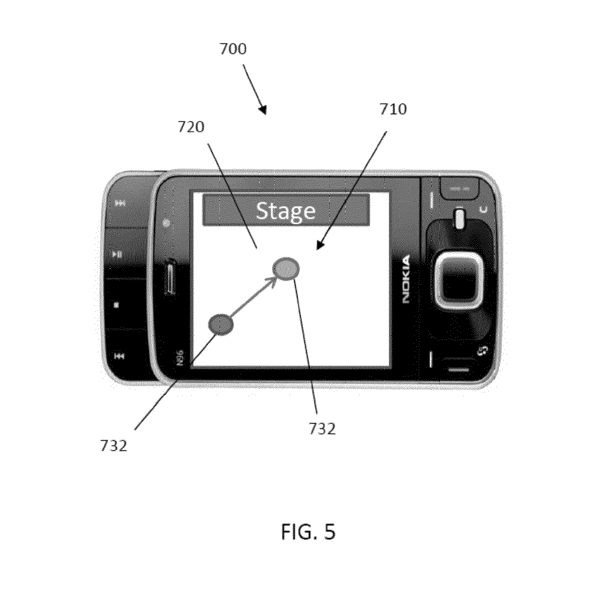

In another embodiment, the media content analysis server may be configured to determine that a user should relocate the mobile terminal so as to capture a second media content from a different position. The media content analysis server may be configured to determine that a user should relocate based at least in part on contextual data received from the mobile terminal in conjunction with the first media content. For example, the first media content may be captured from a position at a concert that is substantially located towards the left-rear of a particular venue. FIG. 5 illustrates an apparatus 700 configured to display a map 720 on a user interface 710. As shown in FIG. 5, the user's original position 730 may be located towards the left-rear of the venue. Accordingly, the first media content captured by the user at the first original position 730 may include an audio track that is distorted, biased, and/or unbalanced. As such, the media content analysis server may determine that the user should relocate to a second position 732 for capturing a second media content comprising a balanced, undistorted audio portion. In some embodiments of the present invention, the media content analysis server may be configured to provide the apparatus 700 with a map 720 instructing the user to relocate so as to capture a second media content including an audio portion that is more desirable, such as an audio portion having a balanced audio track. Specifically, the media content analysis server may be configured to determine that a parameter of the media content, such as the left/right channel balance of an audio track, is outside pre-determined levels for audio track balance. Accordingly, the media content analysis server may provide the user with an indicia, such as a map instructing the user to relocate the mobile terminal to a desired position for capturing a second media content with an audio track balance within pre-determined thresholds. The media content analysis server may include a model of an event venue including pre-determined locations, positions, and/or the like for capturing media content within pre-determined thresholds.

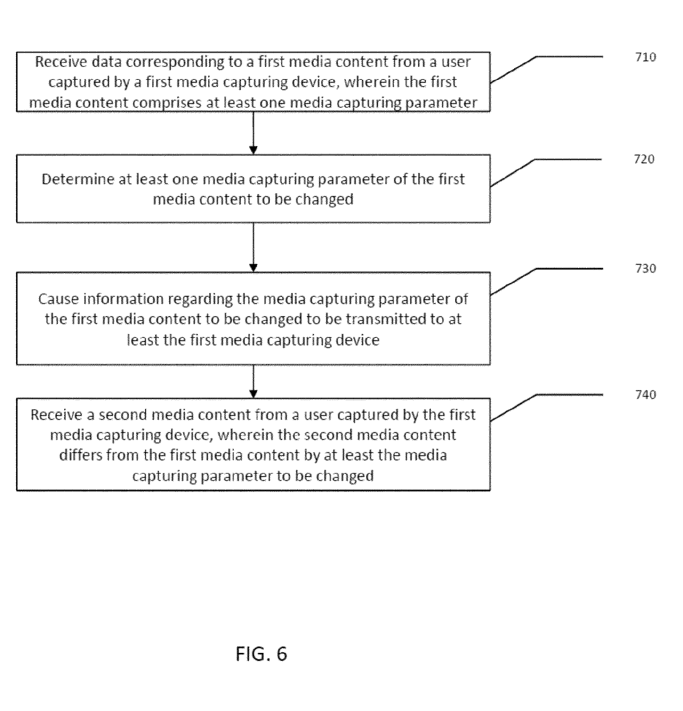

Referring now to FIG. 6, the operations performed by a method, apparatus, and computer program product of an example embodiment as embodied by the media content analysis server 35 or other media content processing device will be described. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by a computer program product including computer program instructions. In this regard, the computer program instructions which embody the procedures described above may be stored by a memory device and executed by a processor of an apparatus. As will be appreciated, any such computer program instructions may be loaded onto a computer or other programmable apparatus (for example, hardware) to produce a machine, such that the resulting computer or other programmable apparatus embody means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture the execution of which implements the function specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

In this regard, the apparatus embodied by the media content processing device may include means, such as the processor, the communications interface, and/or the memory device, for analyzing a first media content captured by a user with a first mobile terminal and determining a subjective and/or objective quality of the first media content to be changed. For example, the apparatus may be configured to receive a first media content captured by a user with a first mobile terminal in near real-time. Additionally and/or alternatively, the media content processing device may be configured to receive contextual data, setting data, parameter data, and/or the like of the first mobile device concurrently with the first media content. In some embodiments, the media content processing device may be configured to receive data corresponding to the first media content captured by a user with a first mobile terminal. The media content processing device may be further configured to determine a subjective and/or objective quality of the first media content to be changed based at least in part on the data received, which corresponds to the first media content captured. As such, the media content processing device may determine a subjective and/or objective quality of the first media content to be changed without receiving the first media content. See block 710. Accordingly, the processor may be configured to determine that a particular parameter, setting, and/or the like of the first mobile terminal should be changed to optimize a subjective and/or objective quality of the media content captured by the mobile terminal. See block 720. For example, the apparatus may determine that a composite media content comprising a plurality of user-generated media content should include media content captured by the first mobile terminal having a different focal length. According to one embodiment, the media content analysis server may be configured to cause information regarding the particular parameter, setting, and/or the like of the first mobile terminal determined to be changed to be transmitted to the first media capturing device. See block 730. The information may include indicia data, textual instructions, audible instructions, augmented reality data, and/or any other form of messaging suitable for communicating with the user. For example, the information may include instructions to change the orientation of the mobile terminal to capture a different field of view. In another embodiment, the instructions may include instructions to change the focal length of the media capturing module of the mobile terminal. According to some embodiments, the media content analysis server may be configured to provide instructions including augmented reality data, such as a map and indicia instructing the user to reposition the mobile terminal to capture a second media content from a different location, orientation, position, and/or the like. According to some embodiments, the media content analysis server may be configured to change the parameters and/or the like of the first mobile terminal such that the user may capture a second media content with the changed parameter, setting, and/or the like without having to provide additional input to the first mobile terminal. According to one example, the media content analysis server may be configured to receive a second media content from a user captured by the first mobile terminal. See block 740. The second media content may differ from the first media content by the changed parameter, setting, and/or the like.

According to one embodiment of the present invention, a media content analysis server may be configured to cause information regarding a particular parameter, setting, and/or the like of at least one media capturing device to be transmitted to the at least one media capturing device such that a plurality of media content captured by a plurality of media capturing devices. For example, a media content analysis server may cause information regarding an initial position of the at least one media capturing device to be transmitted to the at least one media capturing device. In some embodiments, the media content analysis server may cause information regarding the respective initial positions of a plurality of media capturing devices to be transmitted to the respective media capturing device. Additionally and/or alternatively, the media content analysis server may be configured to cause information, such as indicia data, textual instructions, audible instructions, augmented reality data, and/or any other form of messaging suitable for communicating with the user, corresponding to a desired initial position to be transmitted to each of the media capturing devices. As such, the initial positions may include positions at an event venue such that capturing of media content by media capturing devices located proximal to the initial positions may provide for evenly capturing an event venue. Specifically, the event venue may be an event without a specified target area of interest, such as a stage. Accordingly, the plurality of media capturing devices may be positioned throughout the event venue to evenly capture the entire event venue during the event activity.

In another example embodiment, the media content analysis server may be configured to use previously stored data corresponding to a particular event venue, such as point of interest data related to a particular event venue. The point of interest data may include data corresponding to a stage location, desired media capturing locations, an event activity location, and/or the like. Additionally and/or alternatively, the point of interest data may include data corresponding to desired media capturing parameters, such as a desired zoom level, desired field of view, and/or the like. Accordingly, a media content analysis server may be configured to determine a target area of interest, such as dimensions of a stage, and/or the like. As such, the media content analysis server may be configured to determine the number of users required to capture a number of media content at a specific parameter, such as a focal length, to evenly capture the entirety of the target area of interest.

Some advantages of embodiments of the present invention may include increased production of user-generated media content of an event activity having greater artistic value. In addition, additional advantages may include the capture of media content with greater objective and/or subjective quality. Further still, another advantage may include the capture of media content with greater quality with minimal input from the user. For example, a media content analysis server may be configured to automatically change the parameters of a mobile terminal so as to allow the user to capture a second media content having greater quality than a previously captured first media content.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising means for:
receiving data corresponding to a first media content captured by a first media capturing device, wherein the first media content is associated with at least one media capturing parameter;
determining at least a first media capturing parameter associated with the first media content to be changed;
causing information regarding the first media capturing parameter of the first media content to be changed to be transmitted to at least the first media capturing device; and
receiving a second media content captured by the first media capturing device, wherein the second media content differs from the first media content by at least the first media capturing parameter.

2. The apparatus of Claim 1 further comprising means for:
causing the first media capturing parameter of the first media capturing device to change without input from a user so as to cause the media capturing device to capture the second media content, wherein the second media content differs from the first media content by at least the first changed media capturing parameter.

3. The apparatus of Claim 1, wherein the means for first media capturing parametermay include any one of a position, an altitude, a tilt angle, a directional orientation, a zoom level, a focal length, a field of view, acceleration data, gyroscope data, or audio channel data of the first media capturing device.

4. The apparatus of Claim 1 further comprising means for:
causing information to be transmitted to the first media capturing device, wherein the information relates to a request for the first media capturing device to capture the second media content at a different position from the position where the first media content was captured.

5. A method comprising:
receiving data corresponding to a first media content captured by a first media capturing device, wherein the first media content is associated with at least one media capturing parameter;
determining, by at least a processor, at least one media capturing parameter associated with the first media content to be changed;
causing information regarding the first media capturing parameter of the first media content to be changed to be transmitted to at least the first media capturing device; and
receiving a second media content captured by the first media capturing device, wherein the second media content differs from the first media content by at least the media capturing parameter.

6. The method of Claim 5 further comprising:
causing the first media capturing parameter of the first media capturing device to change without input from a user so as to cause the media capturing device to capture the second media content, wherein the second media content differs from the first media content by at least the changed media capturing parameter.

7. The method of Claim 5, wherein the first media capturing parameter may include any one of a position, an altitude, a tilt angle, a directional orientation, a zoom level, a focal length, a field of view, acceleration data, gyroscope data, or audio channel data of the first media capturing device.

8. The method of Claim 5 further comprising:
causing information to be transmitted to the first media capturing device, wherein the information relates to a request for the first media capturing device to capture the second media content at a different position from the position where the first media content was captured.

9. The method of Claim 8, wherein the information regarding the request comprises augmented reality data.

10. A computer program code configured to realize the actions of the method of any of claims 5 to 9 when executed by a processor.

11. A method comprising:
causing data corresponding to a first media content captured by a first media capturing device to be transmitted to a media content analysis device, wherein the first media content is associated with at least one media capturing parameter;
receiving instructions regarding the first media capturing parameter of the first media content to be changed; and
causing data corresponding to a second media content captured by the first media capturing device to be transmitted to a media content analysis device, wherein the second media content differs from the first media content by at least the first media capturing parameter.

12. The method of Claim 11 further comprising:
causing the first media capturing parameter of the first media capturing device to change without input from a user so as to cause the first media capturing device to capture the second media content, wherein the second media content differs from the first media content by at least the changed media capturing parameter.

13. The method of Claim 11, wherein the first media capturing parameter may include any one of a position, an altitude, a tilt angle, a directional orientation, a zoom level, a focal length, a field of view, acceleration data, gyroscope data, or audio channel data of the first media capturing device.

14. The method of Claim 11 further comprising:
receiving information from a media content analysis server, wherein the information relates to a request for the first media capturing device to capture the second media content at a different position from the position where the first media content was captured.

15. An apparatus comprising means for performing the actions of the method according to any claims 1 to 14.
